# FASCICULE DE BREVET EUROPEEN

(11) **EP 1 489 280 B1**
(45) Date de publication et mention de la délivrance du brevet: **11.11.2009**
(21) Numéro de dépôt: 04291301.2
(22) Date de dépôt: 19.05.2004
(51) Int. Cl.: F02B 25/00, F02B 29/08, F02B 75/02, F02B 75/32

(54) **Procédé de combustion d'un moteur quatre temps suralimenté et moteur utilisant un tel procédé**
Aufgeladene Viertakt-Brennkraftmaschine und Verfahren zum Betreiben
Engine and operating method for a supercharged four stroke engine

(30) Priorité: 18.06.2003 FR 0307373
(43) Date de publication de la demande: 22.12.2004
(73) Titulaire: Institut Français du Pétrole, 92852 Rueil-Malmaison Cedex (FR)
(72) Inventeur: Leduc, Pierre, 78650 Beynes (FR); Monnier, Gaétan, 92500 Rueil Malmaison (FR)

(56) Documents cités:
- FR-A- 2 781 011
- GB-A- 893 091
- GB-A- 895 554
- GB-A- 1 059 040
- US-A- 4 561 253
- PATENT ABSTRACTS OF JAPAN vol. 0163, no. 11 (M-1277), 8 juillet 1992 (1992-07-08) & JP 4 086355 A (TOYOTA MOTOR CORP), 18 mars 1992 (1992-03-18)

## Description

La présente invention se rapporte à un procédé de combustion d'un moteur quatre temps à combustion interne suralimenté; notamment un moteur à allumage commandé, et à un moteur utilisant un tel procédé.

Comme cela est connu, la puissance délivrée par un moteur à combustion interne est fonction de la quantité d'air introduite dans la chambre de combustion de ce moteur, quantité d'air qui est elle-même proportionnelle à la densité de cet air.

Ainsi, en cas de besoin d'une forte puissance, il peut y être répondu au moyen d'une compression de l'air avant son admission dans le cylindre du moteur, plus communément appelée suralimentation.

Cette suralimentation peut être réalisée par un turbocompresseur. Une partie de l'énergie perdue dans les gaz d'échappement est récupérée au moyen d'une turbine placée dans le flux de gaz brûlés. Cette énergie est utilisée positivement par un compresseur pour comprimer l'air d'admission, ce qui augmente le remplissage en air et accroît donc les performances du moteur.

Afin d'améliorer encore plus ce remplissage en air, comme cela est mieux décrit dans la demande de brevet FR-A-2 781 011 du demandeur ou dans le brevet US 4 561 253, il est prévu, lors de la phase d'admission, d'évacuer les gaz brûlés résiduels de la chambre de combustion pour les remplacer par de l'air frais suralimenté, étape qui est plus communément appelée balayage des gaz brûlés.

Ce balayage est réalisé en effectuant un "croisement" des soupapes d'échappement et d'admission d'un cylindre en phase d'admission et plus précisément en ouvrant simultanément, pendant quelques dizaines de degrés d'angle de rotation de vilebrequin, les soupapes d'échappement et d'admission de ce cylindre et cela à proximité du point mort haut du piston.

Pour pouvoir réaliser un tel balayage, il est nécessaire d'optimiser la différence de pression entre la pression d'admission de l'air et celle de l'échappement des gaz brûlés au voisinage du point mort haut du piston. Plus précisément, la pression du fluide à l'admission doit être supérieure à celle de la pression des gaz brûlés présents dans la chambre de combustion de manière à pousser ces gaz d'échappement vers la soupape d'échappement et à les remplacer par de l'air frais suralimenté admis par la soupape d'admission.

Cependant, les turbocompresseurs conventionnels qui comprennent une entrée unique des gaz d'échappement dans la turbine présentent un problème non négligeable.

En effet, les gaz d'échappement sortant de chaque cylindre par les moyens d'échappement sont dirigés vers l'entrée unique de la turbine du turbocompresseur par un conduit raccordant, directement ou indirectement par l'intermédiaire d'un collecteur d'échappement, tous les échappements de tous les cylindres avec l'entrée de la turbine.

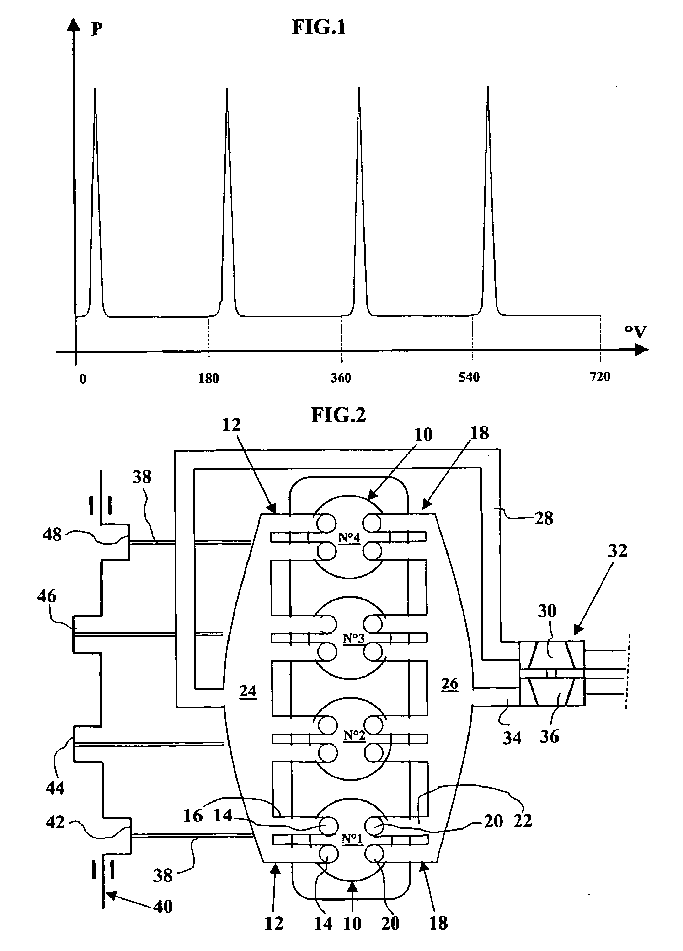

Dans cette configuration, comme cela est mieux visible sur la figure 1 qui illustre, de façon schématique, les pressions d'échappement de chaque cylindre à l'entrée de la turbine, ou dans le collecteur d'échappement, en fonction de la rotation du vilebrequin, il peut être remarqué que, au début de chaque phase d'échappement d'un cylindre, la pression d'échappement mesurée présente la forme d'un pic qui correspond à une augmentation brutale de la pression d'échappement au début de la phase d'échappement pendant quelques degrés d'angle de rotation du vilebrequin, puis par une diminution de cette pression pour ensuite se stabiliser à une valeur déterminée pendant le reste de la phase d'échappement.

Comme le sait l'homme du métier, un moteur quatre temps et à quatre cylindres fonctionne avec des cycles de combustion pour chaque cylindre durant lesquels la phase d'admission d'un cylindre correspondant à l'ouverture de la soupape d'admission et la phase d'échappement d'un autre cylindre, durant laquelle la soupape d'échappement est ouverte, débutent au même balayage des gaz brûlés. Le pic de pression d'échappement généré en début de phase d'échappement gêne, voire empêche, l'évacuation des gaz brûlés par la soupape d'échappement du cylindre en phase d'admission.

Pour remédier à ce problème, il est connu d'utiliser une technologie spécifique de turbocompresseur à double entrée, ou double flux, dénommé turbocompresseur "Twin Scroll". Dans ce type de turbocompresseur, l'entrée des gaz d'échappement au niveau de la turbine est divisée en deux sections, une première section raccordée, directement ou par l'intermédiaire d'un collecteur, aux échappements d'une partie des cylindres et une deuxième section raccordée au reste des échappements des autres cylindres. Chaque section d'entrée de ce turbocompresseur est reliée à des cylindres pour lesquels une phase d'admission d'un cylindre et une phase d'échappement d'un autre cylindre ne se produisent pas simultanément. Ainsi lorsque l'un des cylindres relié à une entrée du turbocompresseur est en phase d'admission avec balayage des gaz brûlés alors qu'un autre des cylindres relié à l'autre entrée du turbocompresseur est en phase d'échappement des gaz brûlés, la pression des gaz d'échappement du cylindre en phase d'échappement ne peut pas interagir avec le balayage des gaz brûlés lors de la phase d'admission de l'autre cylindre.

Cette technologie de turbocompresseur à double flux, bien que donnant satisfaction, est d'un coût relativement plus élevé que les turbocompresseurs conventionnels à entrée unique.

Pour éviter l'utilisation d'un tel compresseur, il est également connu par le document EP 1 243 779, un moteur à combustion interne suralimenté pour lequel on décale le début de l'échappement d'un cylindre en phase d'échappement par rapport au début de l'étape de balayage des gaz brûlés du cylindre en phase d'admission.

Ceci se réalise en utilisant un système de commande des soupapes de conception complexe et d'un coût non négligeable.

La présente invention se propose de remédier aux inconvénients mentionnés ci-dessus en utilisant un turbocompresseur à entrée unique qui permet d'éviter, pendant la phase de balayage du cylindre en phase d'admission, les interactions entre le cylindre où se réalise le balayage de gaz brûlés et le cylindre en phase d'échappement et cela d'une manière simple et économique.

A cet effet, l'invention se rapporte à un moteur à combustion interne suralimenté à quatre temps avec au moins quatre cylindres comprenant des moyens d'admission, des moyens d'échappement, un piston lié par une bielle à un maneton d'un vilebrequin, ledit moteur comprenant des moyens de décalage du début de l'échappement d'un cylindre par rapport au début de l'admission d'un autre cylindre, **caractérisé en ce que** les moyens de décalage comprennent un décalage angulaire circonférentiel du maneton d'un cylindre en phase d'échappement par rapport à un plan passant par le maneton d'un cylindre en phase d'admission.

Ce décalage peut être compris entre 30° et 50° et peut être un décalage dans le sens anti-horaire par rapport au plan ou un décalage dans le sens horaire par rapport à ce même plan.

Pour assurer la compression de l'air d'admission, on peut utiliser un turbocompresseur comprenant une entrée unique.

Les autres caractéristiques et avantages de l'invention vont apparaître à la lecture de la description qui va suivre, donnée à titre uniquement illustratif et non limitatif, et à laquelle sont annexés :
- la figure 2 qui montre un moteur à quatre temps suralimenté selon l'invention;
- la figure 3 qui illustre un moyen, tel que le vilebrequin du moteur, pour réaliser l'invention ;
- les figures 4A à 4D qui illustrent le fonctionnement d'un moteur selon l'invention et
- les figures 5A à 5D qui montrent le fonctionnement d'un moteur selon une variante de l'invention.

Sur la figure 2, un moteur à quatre temps à combustion interne, par exemple à allumage commandé, comprend quatre cylindres 10 ou un multiple de quatre cylindres, tel que huit ou douze cylindres en ligne ou en V. Dans l'exemple de la figure 1, les cylindres sont dénommés successivement cylindre N°1, cylindre N°2, cylindre N°3 et cylindre N°4 à partir du bas de la figure 2. Chaque cylindre comprend au moins un moyen d'admission 12, ici deux admissions, avec une soupape d'admission 14 ainsi qu'une tubulure d'admission 16 et au moins un moyen d'échappement 18, également deux échappements, avec une soupape d'échappement 20 et une tubulure d'échappement 22. Les moyens d'admission 12 aboutissent à un collecteur d'admission 24 alors que les moyens d'échappement 18 aboutissent à un collecteur d'échappement 26. Le collecteur d'admission est relié par une conduite 28 à la sortie de la section de compression 30 d'un turbocompresseur 32 à entrée unique alors que le collecteur d'échappement 26 est relié par une conduite 34 à l'entrée unique de la turbine 36 de ce turbocompresseur.

Chaque cylindre comprend également un piston (non représenté) entraîné dans un mouvement translatif alternatif par l'intermédiaire d'une bielle 38 reliée à un maneton d'un vilebrequin 40, maneton qui est référencé 42, 44, 46, 48 respectivement pour les pistons des cylindres N°1, N°2, N°3 et N°4.

Dans l'exemple représenté sur cette figure, le moteur fonctionne avec un cycle qui est dénommé 1, 3, 4, 2 dans lequel, durant le cycle de combustion et à un angle de rotation déterminé du vilebrequin, un cylindre, comme le cylindre N°1, est en phase d'admission avec une étape de balayage des gaz brûlés présents dans la chambre de combustion par ouverture simultanée des soupapes d'admission et d'échappement, le cylindre suivant (cylindre N°2) est en phase de compression avec les soupapes d'échappement et d'admission en position fermée, le cylindre N°3 en phase d'échappement avec ouverture des soupapes d'échappement et le dernier cylindre (cylindre N°4) en phase de détente, les soupapes d'échappement et d'admission étant fermées.

Afin d'éviter que les gaz d'échappement provenant du cylindre N°3 ne viennent perturber l'évacuation des gaz d'échappement lors de l'étape de balayage des gaz brûlés du cylindre N°1 en phase d'admission, il est prévu de décaler le début de la phase d'échappement du cylindre N°3 par rapport au début de la phase d'admission du cylindre N°1.

Plus précisément, il est prévu de réaliser cette phase d'échappement d'une manière telle que le pic de pression d'échappement, tel que mentionné plus haut, ne se produise pas pendant l'étape de balayage des gaz brûlés du cylindre en début de phase d'admission.

A titre d'exemple, ceci peut être réalisé soit en débutant cette phase d'échappement une fois que la soupape d'échappement 20 du cylindre N°1 en phase d'admission est fermée, ou quasiment fermée, c'est-à-dire que l'étape de balayage est terminée ou quasiment terminée, soit en commençant la phase d'admission du cylindre N°1 après que le pic de pression d'échappement généré par les gaz d'échappement issus du cylindre N°3 soit terminé, ou presque terminé, c'est-à-dire une fois que la pression d'échappement de ce cylindre est stabilisée ou quasiment stabilisée dans le collecteur ou à l'entrée du turbocompresseur.

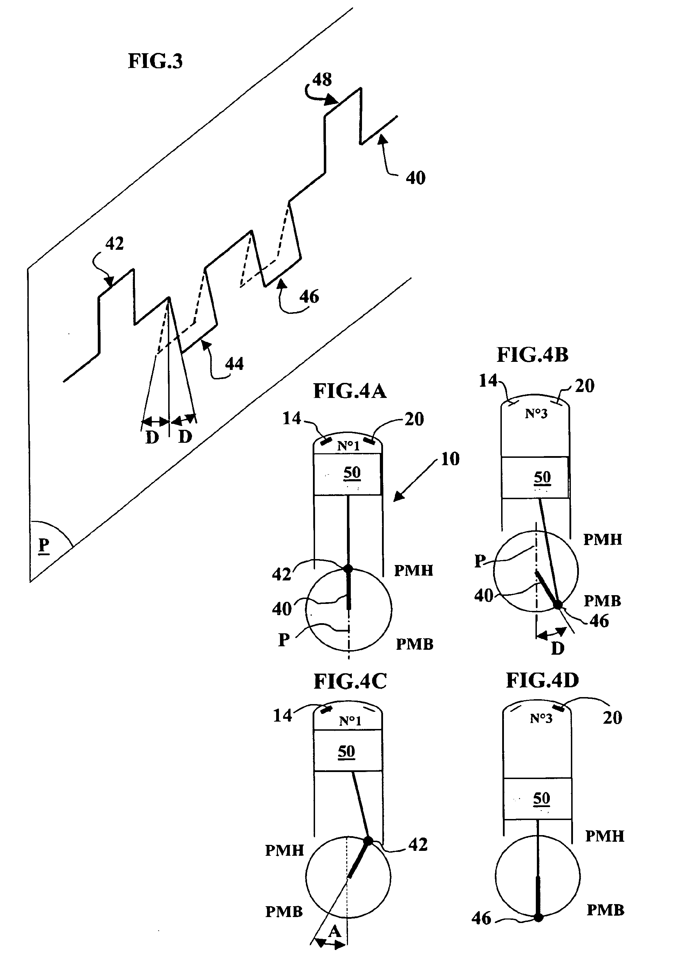

Pour réaliser ce décalage entre la phase d'admission du cylindre N°1 et la phase d'échappement du cylindre N°3, il est prévu, comme illustré sur la figure 3, d'utiliser un vilebrequin dont au moins deux manetons, ici les manetons 44 et 46 reliant les pistons des cylindres N°2 et N°3, ne sont pas dans le même plan P que les manetons restants, c'est-à-dire les manetons 42 et 48 reliant les pistons des cylindres N°1 et N°4.

De préférence, les manetons liés aux pistons des cylindres N°2 et N°3 auront un décalage angulaire circonférentiel D dans le sens horaire par rapport au plan P ou auront un décalage D du même ordre dans le sens anti horaire.

Par plan P, il est entendu le plan passant habituellement par les manetons et l'axe de rotation du vilebrequin. Dans l'exemple décrit, il est considéré que le plan P passe par les manetons 42 et 48 ainsi que par l'axe de rotation du vilebrequin 40.

A titre d'exemple, le fonctionnement d'un tel moteur sera explicité en se rapportant aux figures 4A à 4D qui montre le cylindre N°1 en début de phase d'admission avec l'étape de balayage de gaz brûlés et dans lequel le maneton 42 est situé dans le plan P passant par un axe vertical coupant l'axe de rotation du vilebrequin 40 (figure 4A) et le cylindre N°3 avec un décalage D du maneton 44 dans un sens anti-horaire par rapport au plan P (figure 4B). Les autres cylindres ne sont pas représentés pour la clarté de la description ci-après, ces cylindres étant, pour le cylindre N°2, en phase de compression et, pour le cylindre N°4, en phase de détente.

Pendant le cycle de fonctionnement, le cylindre N°1 en phase d'admission et le maneton 42, et conséquemment le piston 50, se trouve au voisinage de son point mort haut (PMH). Dans cette position, les soupapes d'admission 14 ainsi que les soupapes d'échappement 20 sont ouvertes pour effectuer le balayage des gaz brûlés présents dans la chambre de combustion de ce cylindre (figure 4A). A cet instant, le piston 50 du cylindre N°3 n'a pas encore atteint sa position de point mort bas, car le maneton 46 auquel il est relié est situé en retrait par rapport au point mort bas (PMB). La position représentée sur la figure 4B correspond sensiblement à la fin de la phase de détente du cylindre N°3 durant laquelle les soupapes d'admission 14 et d'échappement 20 sont fermées. Après quelques degrés de rotation du vilebrequin 40 dans le sens horaire, le piston 50 du cylindre N°1 se trouve dans la position illustrée à la figure 4C et le maneton 42 a quitté sa position de point mort haut (PMH) pour arriver à la position illustrée sur la figure par l'intermédiaire d'un angle de rotation A du vilebrequin 40. Dans cette position, les soupapes d'échappement 20 se ferment et seules les soupapes d'admission restent ouvertes pour continuer la phase d'admission jusqu'au point mort bas (PMB). Durant cette rotation A du vilebrequin, le maneton 46 du cylindre N°3 se déplace dans le sens horaire pour atteindre la position de point mort bas (PMB), comme illustrée sur la figure 4D. Cette position, dans laquelle le piston 50 se trouve au voisinage du point mort bas, correspond au début de la phase d'échappement de ce cylindre et les soupapes d'échappement 20 commencent à s'ouvrir ou ont commencé à s'ouvrir.

Ainsi, entre la position de la figure 4A et celle de la figure 4C, le balayage des gaz brûlés a pu être réalisé dans le cylindre N°1 alors que la phase d'échappement du cylindre N°3 n'a pas encore commencé ou est sur le point de commencer.

Au début de la phase d'échappement du cylindre N°3, il se crée, comme précédemment mentionné, un pic de pression d'échappement mais ce pic de pression n'aura aucune influence sur le balayage des gaz brûlés, celui étant terminé ou quasiment terminé dans le cylindre N°1 lors de l'apparition de ce pic dans le collecteur d'échappement 26.

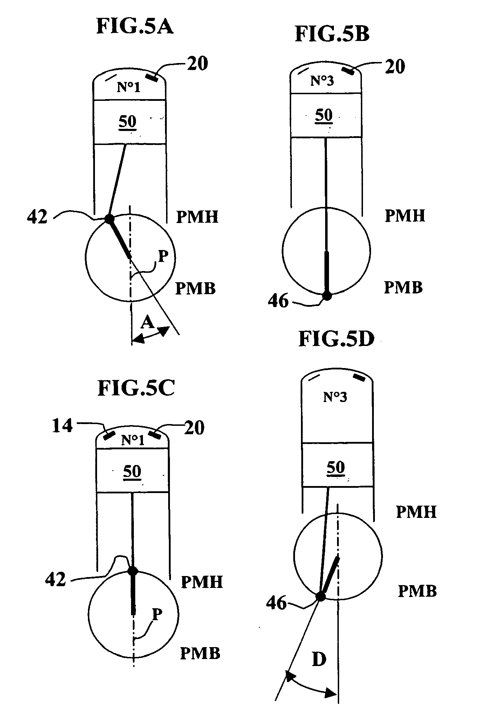

Dans une variante de l'invention, telle qu'illustrée aux figures 5A à 5D, le décalage D du maneton 46 du cylindre N°3 par rapport au plan P est prévu dans le sens horaire comme représenté sur la figure 5D alors que le maneton 42 du cylindre N°1 en phase d'admission se situe au voisinage du point mort haut comme visible sur la figure 5C.

De ce fait, lorsque le cylindre N°1 est en phase d'admission comme montré à la figure 5C avec ouverture simultanée des soupapes d'admission 14 et d'échappement 20 pour assurer l'étape de balayage des gaz brûlés, le cylindre N°3 a déjà bien entamé sa phase d'échappement, les soupapes d'échappement 20 ayant été ouvertes depuis le point mort bas (PMB). Plus précisément, le pic de pression d'échappement a été déjà produit entre le point mort bas et la position du maneton 46 représentée sur la figure 5D.

Ainsi, lorsque le maneton 46 du cylindre N°3 se trouve au point mort bas (figure 5B) qui correspond au début de sa phase d'échappement, le maneton 42 du cylindre N°1 n'a pas encore atteint sa position de point mort haut (figure 5A) correspondant à sa phase d'admission. Dans ces positions, le cylindre N°3 entame sa phase d'échappement et les soupapes d'échappement 20 sont ouvertes et le cylindre N°1 a quasiment terminé sa phase d'échappement, les soupapes d'échappement 20 étant ouvertes.

A partir de cette position illustrée aux figures 5A et 5B, le vilebrequin est entraîné en rotation sur quelques degrés dans le sens horaire (angle A) et le maneton 46 du cylindre N°3 passe de la position de la figure 5B à celle de la figure 5D. Durant ce cheminement, le pic de pression d'échappement généré par l'échappement du cylindre N°3 est produit dans le collecteur d'échappement puis la pression est stabilisée dans ce collecteur d'échappement. A la fin de la production du pic de pression, le cylindre N°1 commence sa phase d'admission avec balayage des gaz brûlés en ouvrant la soupape d'admission 14. De ce fait, le pic de pression ne peut pas perturber l'évacuation des gaz brûlés du cylindre N°1 pendant l'étape de balayage.

Bien entendu, dans la description qui précède, lorsqu'il est fait mention de point mort haut ou de point mort bas pour un maneton cela s'entend aussi pour la position du piston auquel il est lié par la bielle.

De même, lorsque l'on mentionne que le piston ou le maneton se situe au voisinage du point mort haut ou du point mort bas, il est entendu que le piston ou le maneton se trouve quelques degrés ou de quelques dizaines de degrés avant ou après le point mort.

## Revendications

1. Moteur à combustion interne suralimenté à quatre temps avec au moins quatre cylindres (10) comprenant des moyens d'admission (12), des moyens d'échappement (18), un piston (50) lié par une bielle (38) à un maneton (42, 44, 46, 48) d'un vilebrequin (40), ledit moteur comprenant des moyens de décalage (44, 46) du début de l'échappement d'un cylindre par rapport au début de l'admission d'un autre cylindre, **caractérisé en ce que** les moyens de décalage comprennent un décalage angulaire circonférentiel (D) du maneton (46) d'un cylindre en phase d'échappement par rapport à un plan (P) passant par le maneton (42) d'un cylindre en phase d'admission.

2. Moteur à combustion interne suralimenté à quatre temps selon la revendication 1, **caractérisé en ce que** le décalage (D) est compris entre 30 et 50°.

3. Moteur à combustion interne suralimenté à quatre temps selon la revendication 1 ou 2, **caractérisé en ce que** le décalage (D) est un décalage dans le sens anti-horaire par rapport au plan (P).

4. Moteur à combustion interne suralimenté à quatre temps selon la revendication 1 ou 2, **caractérisé en ce que** le décalage (D) est un décalage dans le sens horaire par rapport au plan (P).

5. Moteur à combustion interne suralimenté à quatre temps selon l'une des revendications 1 à 4 dans lequel un turbocompresseur assure la compression de l'air d'admission, **caractérisé en ce que** le turbocompresseur (32) comprend une entrée unique.

## Claims

1. A four-stroke supercharged internal combustion engine with at least four cylinders (10) including intake means (12), exhaust means (18), a piston (50) linked by a connecting rod (38) to a crankpin (42, 44, 46, 48) of a crankshaft (40), said engine including means for offsetting (44, 46) the start of the exhaust of a cylinder relative to the start of the intake of another cylinder, **characterised in that** the offset means include a circumferential angular offset (D) of the crankpin (48) of a cylinder in the exhaust phase relative to a plane (P) going through the crankpin (42) of a cylinder in the intake phase.

2. The four-stroke supercharged internal combustion engine according to Claim 1, **characterised in that** the offset (D) is between 30 and 50°.

3. The four-stroke supercharged internal combustion engine according to Claim 1 or 2, **characterised in that** the offset (D) is a counter-clockwise offset relative to the plane (P).

4. The four-stroke supercharged internal combustion engine according to Claim 1 or 2, **characterised in that** the offset (D) is a clockwise offset relative to the plane (P).

5. The four-stroke supercharged internal combustion engine according to one of Claims 1 to 4 in which a turbocharger ensures the compression of the intake air, **characterised in that** the turbocharger (32) includes a single inlet.

## Patentansprüche

1. Viertakt-verbrennungsmotor mit Aufladung und mindestens vier Zylindern (10), umfassend Einlassmittel (12), Auslassmittel (16), einen Kolben (50), der durch eine Pleuelstange (38) mit einem Zapfen (42, 44, 46, 48) einer Kurbelwelle (40) verbunden ist, wobei dieser Motor Mittel (44, 46) zur Verschiebung des Beginns des Auspuffhubs relativ zum Beginn des Einlasshubs eines anderen Zylinders aufweist, **dadurch gekennzeichnet, dass** die Verschiebungsmittel eine Umfangswinkelverschiebung (D) des Zapfens (46) eines Zylinders in der Auslassphase relativ zu einer Ebene (P) umfassen, der durch den Zapfen (42) eines Zylinders in der Einlassphase geht.

2. Viertakt-Verbrennungsmotor mit Aufladung nach Anspruch 1, **dadurch gekennzeichnet, dass** die Verschiebung (D) zwischen 30° und 50° beträgt.

3. Viertakt-Verbrennungsmotor mit Aufladung nach Anspruch 1 oder 2, **dadurch gekennzeichnet, dass** die Verschiebung eine Verschiebung (D) entgegen dem Uhrzeigersinn relativ zur Ebene (P) ist.

4. Viertakt-Verbrennungsmotor mit Aufladung nach Anspruch 1 oder 2, **dadurch gekennzeichnet, dass** die Verschiebung eine Verschiebung (D) im Uhrzeigersinn relativ zur Ebene (P) ist.

5. Viertakt-Verbrennungsmotor mit Aufladung nach einem der Ansprüche 1 bis 4, wobei ein Turbolader die Verdichtung der Ansaugluft gewährleistet, **dadurch gekennzeichnet, dass** der Turbolader (32) einen einzigen Einlass aufweist.
